# EUROPÄISCHE PATENTSCHRIFT

(11) **EP 1 203 697 B1**
(45) Veröffentlichungstag und Bekanntmachung des Hinweises auf die Patenterteilung: **21.06.2006**
(21) Anmeldenummer: 01124951.3
(22) Anmeldetag: 19.10.2001
(51) Int. Cl.: B60R 16/00, B60K 6/00, F01P 3/20, H01M 6/50, B60K 6/04

(54) **Kraftfahrzeug mit einem Antriebsverbrennungsmotor**
Vehicle with an internal combustion engine
Véhicule avec un moteur à combustion interne

(30) Priorität: 01.11.2000 DE 10054007
(43) Veröffentlichungstag der Anmeldung: 08.05.2002
(73) Patentinhaber: NuCellSys GmbH, 73230 Kirchheim/Teck-Nabern (DE)
(72) Erfinder: Friebe, Peter, Dr., 73230 Kirchheim (DE); Griesmeier, Uwe, 88677 Markdorf (DE); Keppeler, Berthold, Dr., 73277 Owen (DE); Ludwig, Jürgen, 72658 Bempflingen (DE)
(74) Vertreter: Finkele, Rolf

(56) Entgegenhaltungen:
- EP-A- 0 917 976
- DE-A- 4 219 938
- DE-A- 19 913 794
- DE-C- 19 913 795
- PATENT ABSTRACTS OF JAPAN Bd. 0090, Nr. 87 (M-372), 17. April 1985 (1985-04-17) & JP 59 213940 A (NISSAN JIDOSHA KK), 3. Dezember 1984 (1984-12-03)
- PATENT ABSTRACTS OF JAPAN Bd. 2000, Nr. 13, 5. Februar 2001 (2001-02-05) & JP 2000 303836 A (TOYOTA MOTOR CORP), 31. Oktober 2000 (2000-10-31)
- PATENT ABSTRACTS OF JAPAN Bd. 1997, Nr. 04, 30. April 1997 (1997-04-30) & JP 8 339816 A (AQUEOUS RES:KK; AISIN AW CO LTD), 24. Dezember 1996 (1996-12-24)

## Beschreibung

Die Erfindung betrifft ein Kraftfahrzeug mit einem Antriebsverbrennungsmotor nach dem Oberbegriff des Patentanspruchs 1.

Die elektrische Leistung, die für die elektrischen Verbraucher an Bord eines Kraftfahrzeugs zur Verfügung steht, richtet sich insbesondere nach der Größe und Leistungsfähigkeit der Lichtmaschine, welche üblicherweise eine Leistung zwischen 1,5 und 2,5 kW aufweist. Somit können einige elektrische Verbraucher nur bei eingeschalteter Brennkraftmaschine betrieben werden.

Es ist bereits aus DE 197 03 171 A1 ein von einem Antriebsverbrennungsmotor angetriebenes Kraftfahrzeug bekannt, das ein Brennstoffzellensystem als Stromerzeugungseinrichtung (APU auxiliary power unit) enthält, das die elektrischen Verbraucher im Fahrzeug mit Energie versorgt und unabhängig vom Betrieb der Brennkraftmaschine aktivierbar ist. Das Brennstoffzellensystem versorgt auch den Antriebsverbrennungsmotor mit elektrischer Energie. Mit dem Brennstoffzellensystem ist eine Batterie verbunden, die beim Anlassen des Verbrennungsmotors Strom abgibt und kurzzeitige Spitzenbelastungen abdeckt. Somit bilden das Brennstoffzellensystem, umfassend Brennstoffzellen sowie Gaserzeugungssystem, und die Batterie ein Hybridsystem zur elektrischen Energieversorgung.

Aus der gattungsbildenden DE 199 13 795 C1 ist eine Antriebsvorrichtung für ein Kraftfahrzeug bekannt, die eine aus einem Kraftstofftank mit Kraftstoff versorgte Brennkraftmaschine, ein Brennstoffzellensystem sowie eine sowohl mit der Brennkraftmaschine als auch mit dem Brennstoffzellensystem verbundene Batterie umfasst. Die Brennkraftmaschine und das Brennstoffzellensystem sind an einen gemeinsamen Kühlkreislauf angeschlossen. Ferner erfolgt die Luftversorgung der Brennkraftmaschine und einer Brennstoffzelle über einen gemeinsamen Luftfilter. Schließlich sind die Brennstoffzelle sowie drei in dem Brennstoffzellensystem vorgesehene Gas/Gas-Wärmetauscher über entsprechende Rohrleitungen mit einer Abgasanlage der Brennkraftmaschine verbunden.

Die DE 199 13 794 A1 offenbart ein Fahrzeug, das eine Brennkraftmaschine sowie ein eine Gaserzeugungseinrichtung und eine Brennstoffzelle aufweisendes Brennstoffzellensystem umfasst. Die Brennkraftmaschine und das Brennstoffzellensystem sind in einem Kühlkreislauf an einen gemeinsamen Kühler angeschlossen. Abgase des Gaserzeugungssystems und der Brennstoffzelle werden über entsprechende Leitungen einer auch mit der Brennkraftmaschine verbundenen Abgasreinigung zugeführt, wobei die Abgase der Brennkraftmaschine wahlweise über eine Heizschlange durch das Gaserzeugungssystem hindurchgeleitet oder über eine Bypass-Leitung an dem Gaserzeugungssystem vorbeigeführt werden können.

Die DE 42 19 938 A1 beschreibt eine Verkleidungsplatte, die zur Verwendung als Karosserieteil in einem Kraftfahrzeug vorgesehen ist und hohle Bereiche aufweist, die als Verstärkungsrippen oder Strömungswege für Wärmetauschermedien dienen.

Aufgabe der Erfindung ist es, ein Fahrzeug mit einem Antriebsverbrennungsmotor und einem Hybridsystem aus Brennstoffzellen-APU und Batterie derart auszubilden, dass auf einfache Art und Weise eine Verringerung von Abgasemissionen des Antriebsverbrennungsmotors erreicht werden kann.

Diese Aufgabe wird durch ein Fahrzeug gemäß Patentanspruch 1 gelöst. Vorteilhafte Ausführungen der Erfindung sind Gegenstand von Unteransprüchen.

Die Energie- und/oder Stoffströme des Antriebsverbrennungsmotors und des Brennstoffzellensystems werden gekoppelt (Hinweis: APU und Brennstoffzellensystem werden im weiteren synonym verwendet).

Durch diese Maßnahmen werden insbesondere folgende Vorteile erzielt:
- Wirkungsgradverbesserung;
- Kraftstoffeinsparung;
- Nutzen gemeinsamer Baukomponenten wird möglich;
- geringere Baugröße;
- Kostenreduzierung;
- Startzeitverkürzung des Gaserzeugungssystems im Brennstoffzellensystem sowie des Abgaskatalysators im Abgasstrom des Verbrennungsmotors wird ermöglicht;
- Reduktion von Emissionen, insbesondere der Startemissionen.

Gemäß der Erfindung ist, zur Verringerung von Abgasemissionen, insbesondere zur Reduzierung von Stickoxiden, eine Zudosierung von Wasserstoff aus dem Gaserzeugungssystem in den Abgasstrom des Antriebsverbrennungsmotors vorgesehen.

In einer vorteilhaften Ausführungsform der Erfindung sind der Antriebsverbrennungsmotor und das Brennstoffzellensystem in einem gemeinsamen Kühlkreislauf angeordnet. Somit wird eine kompakte Bauweise erreicht, da der Bedarf für separate Kühlsysteme für Brennkraftmaschine und Brennstoffzellensystem entfällt. Im Bedarfsfall kann der verwendete Kühler gegenüber einem herkömmlichen Fahrzeugkühler vergrößert werden.

Die Leitungen zum Transport des Kühlmediums im Kühlsystem sind vorteilhaft thermisch mit der Karosserie des Kraftfahrzeuges gekoppelt. Die Leitungen können innerhalb oder außerhalb der Karosserie, z.B. im Bereich der Türschwelle, verlaufen. Die Leitungslänge zwischen der APU (z.B. im Fahrzeugheck platziert) und dem Kühler (z.B. in der Fahrzeugfront platziert) kann vorteilhaft als Kühlstrecke genutzt werden. Die Leitungen können insbesondere in durchgängigen Hohlräume durch die Fahrzeugkarosserie angeordnet werden, wodurch z.B. kostenintensives Befestigungsmaterial an der Fahrzeugunterseite eingespart werden kann.

APU und Brennkraftmaschine können jeweils zu unterschiedlichen Betriebspunkten auf Spitzenkühlleistungen zurückgreifen, da die Spitzenkühlleistung für den Motor bei Fahrbetrieb und für die APU bei Fahrzeugstillstand erforderlich ist.

Im Fall der Standklimatisierung des Fahrzeuginnenraums kann bei ausgeschaltetem Antriebsverbrennungsmotor die APU zur Erzeugung elektrischer Energie für die Kühlung des Fahrgastinnenraums gestartet werden. Bei niedrigen Außentemperaturen kann das Fahrzeug vorgeheizt werden, indem das Gaserzeugungssystem der APU gestartet wird. Eine Inbetriebnahme des gesamten Brennstoffzellensystems ist hierfür nicht notwendig. Die erforderliche elektrische Energie kann aus der Batterie entnommen werden. Durch Verbrennen von Kraftstoff kann thermische Energie gewonnen werden.

In einer weiteren vorteilhaften Ausführung der Erfindung ist das Gaserzeugungssystem des Brennstoffzellensystems mit dem Abgasstrang des Antriebsverbrennungsmotors thermisch gekoppelt. Somit kann im Falle einer Nichtnutzung der APU bei laufendem Antriebsverbrennungsmotor die APU durch die Abwärme des Motors auf entsprechender Betriebstemperatur gehalten werden. Ein Zuschalten der APU im Bedarfsfall kann somit wesentlich schneller erfolgen. Andererseits kann die APU in der Startphase des Fahrzeuges den Abgaskatalysator des Motors vorheizen, wodurch die Abgasemissionen beim Start verringert werden, da die Anspringtemperatur des Katalysators schneller erreicht wird. Es ist aber auch möglich, dass die APU den Antriebsverbrennungsmotor im Standbetrieb des Fahrzeuges über das Kühlwasser vorwärmt. Dadurch wird der Startkomfort verbessert und die Lebensdauer des Motors erhöht.

In einer weiteren vorteilhaften Ausführung der Erfindung ist zusätzlich zu dem Antriebsverbrennungsmotor ein Elektromotor vorhanden, der unterstützend oder alternativ zum Antriebsverbrennungsmotor den Antrieb des Fahrzeuges gewährleistet. Im Falle eines Motorschadens kann die APU z.B. derart geschaltet werden, dass sie als Antriebsaggregat für den Elektromotor dient. Der Elektromotor kann z.B. der Anlasser oder Starter des Fahrzeuges oder ein Generator sein. Somit kann man das Fahrzeug ohne Fremdhilfe zur nächstgelegenen Werkstatt fahren. Hieraus ergeben sich Vorteile für den Offroad-Betrieb des Fahrzeuges und hinsichtlich der Sicherheit in dünnbesiedelten Gebieten.

Weitere Vorteile des zusätzlichen Elektromotors ergeben sich z.B. bei Fahrverbot von Kraftfahrzeugen mit Verbrennungsmotoren wegen Smogs. Hierbei kann mit abgeschaltetem Verbrennungsmotor weitergefahren werden, wobei der Elektromotor als Hauptantrieb des Fahrzeuges dient. Des weiteren kann der Elektromotor als Hauptantrieb z.B. im Stau oder im Stadtverkehr (Stop-und-Go-Verkehr) genutzt werden. Hieraus ergeben sich auch weitere Vorteile hinsichtlich der Kraftstoffeinsparung.

Es ist auch möglich, die Pannenanfälligkeit des Fahrzeuges hinsichtlich der elektrischen Versorgung zu verringern. So kann z.B. die Batterie nach längeren Standzeiten oder im Fall eines Kriechstroms über eine Schutzschaltung selbständig nachgeladen werden, ohne dass hierbei der Motor gestartet oder der Fahrer anwesend sein muss. Ferner kann auch das Kühlwasser über einen Sensor überwacht und bei Bedarf gewärmt werden, so dass z.B. im Winter Frostschäden am Kühler vermieden werden können.

Weiterer Vorteile der Integration eines Hybridsystems aus Brennstoffzellensystem und Batterie in ein Kraftfahrzeug ergeben sich bei der Spitzenbeanspruchung des Systems in der Startphase, bei der die Batterie wesentlich geschont wird. In diesem Zusammenhang wird auch von Peakshaving gesprochen. Ein weiterer Vorteil ist die schnellere Verfügbarkeit größerer elektrischer Energiemengen.

Darüber hinaus ergibt sich eine Verbesserung der Dynamik der APU während des Fahrbetriebs. Hieraus ergeben sich Vorteile hinsichtlich der Lebensdauer der APU und des Antriebsverbrennungsmotors.

Um Kraftstoff einzusparen kann z.B. bei Bergabfahrten der Antriebsverbrennungsmotor abgeschaltet werden. Die APU übernimmt hierbei die elektrische Versorgung von z.B. Bremskraftverstärker und Servolenkung, um ein sicheres Fahren zu ermöglichen.

Außerdem wird die Batterie im Standbetrieb des Fahrzeuges bei gleichzeitigem Betrieb elektrischer Verbraucher batterieschonend entladen, wobei sie nicht tiefentladen wird. Somit ist es möglich, z.B. eine Steckdose mit 220V an Bord des Fahrzeugs zu integrieren. Außerdem kann die Energie der Batterie über einen längeren Zeitraum genutzt werden.

Zur Realisierung eines solchen Hybridsystems kann auf die bereits in herkömmlichen Fahrzeugen vorhandene Starterbatterie zurückgegriffen werden. Diese Starterbatterie ist im Hinblick auf Leistung und Kapazität gut geeignet, um mit der APU ein Hybridsystem zu bilden.

Zur Optimierung des Wasserhaushalts der APU kann das in der Klimaanlage des Fahrzeuges anfallende Flüssigwasser genutzt werden. Dieses Flüssigwasser kann z.B. zur Kühlung des Brennstoffzellensystems oder zur Befeuchtung der in dem Gaserzeugungssystem erzeugten Gase verwendet werden. Bei hohen Außentemperaturen fällt betriebsbedingt durch die Klimaanlage mehr Flüssigwasser an, wodurch die bei diesen Betriebszuständen (hohe Außentemperatur) erschwerte Betriebsführung der APU hinsichtlich Kühlleistung und Wassermanagement erleichtert wird.

Weiterhin kann eine größere Zahl elektrischer Verbraucher bei ausgeschaltetem Motor mit elektrischer Leistung versorgt werden, als es im Stand der Technik möglich ist. Außerdem können mechanisch angetriebene Teile elektrisch betrieben werden ("riemenloser Motor").

Im folgenden wird die Erfindung anhand einer Zeichnung näher erläutert.

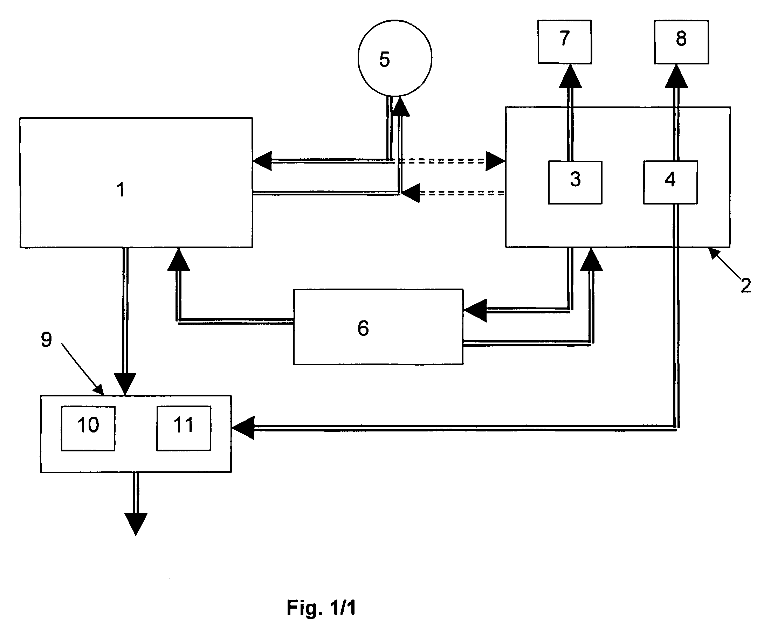

Die einzige Zeichnung zeigt den Aufbau eines erfindungsgemäßen Fahrzeugs mit einem Antriebsverbrennungsmotor **1** sowie einer APU **2**. Sie umfasst als wesentliche Komponenten einen Brennstoffzellenstack **3** und ein Gaserzeugungssystem **4**. Im Gaserzeugungssystem wird das wasserstoffreiche Brenngas für den Brennstoffzellenstack erzeugt. Der Fahrzeugkühler **5** des Kraftfahrzeugs ist mit dem Antriebsverbrennungsmotor **1** und der APU **2** verbunden. Somit können Brennkraftmaschine **1** und APU **2** gleichzeitig und mittels eines gemeinsamen Kühlers **5** gekühlt werden.

Der Antriebsverbrennungsmotor **1** ist mit einer Batterie **6** verbunden. Mit der Batterie **6** wird insbesondere während der Startphase des Motors **1** dieser mit elektrischer Energie versorgt. Gleichzeitig sind APU **2** und Batterie **6** miteinander verbunden, wodurch ein Hybridsystem zur Bordstromversorgung gebildet wird. Die APU **2** kann somit Spitzenbelastungen der Batterie **6** während der Startphase des Fahrzeuges verhindern. Außerdem kann die Batterie **6** mittels der APU aufgeladen werden, z.B. bei längeren Standzeiten des Kraftfahrzeugs. Andererseits kann die Batterie **6** zusätzliche Energie der APU **2** zur Versorgung elektrischer Verbraucher liefern.

Der Brennstoffzellenstack **3** der APU **2** ist mit den elektrischen Verbrauchern **7**, z.B. Klimaanlage verbunden. Das Gaserzeugungssystem **4** ist thermisch mit der Standheizung **8** zur Beheizung des Fahrzeuginnenraums verbunden.

Das Abgas der Brennkraftmaschine **1** wird durch ein System **9**, umfassend einen Wärmetauscher **10** und/oder einen Abgaskatalysator **11** geleitet. Dieses System **9** ist mit dem Gaserzeugungssystem **4** der APU **2** thermisch gekoppelt. Es ist somit möglich, mittels der Abgaswärme der Brennkraftmaschine **1** das Gaserzeugungssystem **4** vorzuheizen. Bei laufendem Motor **1** wird das Gaserzeugungssystem **4** warmgehalten und steht bei Bedarf in kurzer Zeit zur Verfügung. Zum anderen kann mit der Wärme des Gaserzeugungssystems **4** der Abgaskatalysator **11** vorgeheizt werden, bevor der Motor **1** gestartet wird. Der Katalysator kann somit seine Arbeitstemperatur sehr schnell erreichen, so dass im Ergebnis eine Verminderung der Startemissionen des Motors erzielt wird.

## Patentansprüche

1. Kraftfahrzeug mit einem Antriebsverbrennungsmotor (1), sowie einer Stromversorgungseinrichtung zur Versorgung der elektrischen Verbraucher an Bord des Fahrzeugs, wobei die Stromversorgungseinrichtung ein Brennstoffzellensystem (2) sowie eine damit gekoppelte Batterie (6) umfasst, wobei Energie- und/oder Stoffströme des Antriebsverbrennungsmotors (1) und des Brennstoffzellensystems (2) miteinander gekoppelt sind,
**dadurch gekennzeichnet, dass** ein Gaserzeugungssystem (4) des Brennstoffzellensystems (2) dazu eingerichtet ist, Wasserstoff in einen Abgasstrom des Antriebsverbrennungsmotors (1) zu dosieren.

2. Kraftfahrzeug nach Anspruch 1,
**dadurch gekennzeichnet, dass** der Antriebsverbrennungsmotor (1) und das Brennstoffzellensystem (2) an einen gemeinsamen Kühlkreislauf (5) angeschlossen sind.

3. Kraftfahrzeug nach Anspruch 2,
**dadurch gekennzeichnet, dass** der Kühlkreislauf thermisch mit der Karosserie des Kraftfahrzeuges gekoppelt ist.

4. Kraftfahrzeug nach einem der vorangehenden Ansprüche,
**dadurch gekennzeichnet, dass** das Gaserzeugungssystem (4) des Brennstoffzellensystems (2) und der Abgasstrang des Antriebsverbrennungsmotors (1) thermisch gekoppelt sind.

5. Kraftfahrzeug nach Anspruch 4,
**dadurch gekennzeichnet, dass** das Gaserzeugungssystem (4) des Brennstoffzellensystems (2) und der Abgasreinigungskatalysator (11) im Abgasstrang des Antriebsverbrennungsmotors (1) thermisch gekoppelt sind.

6. Kraftfahrzeug nach einem der vorangehenden Ansprüche,
**dadurch gekennzeichnet, dass** das Gaserzeugungssystem (4) des Brennstoffzellensystems (2) thermisch mit dem Fahrzeuginnenraum (8) gekoppelt ist.

7. Kraftfahrzeug nach einem der vorangehenden Ansprüche,
**dadurch gekennzeichnet, dass** das Gaserzeugungssystem (4) des Brennstoffzellensystems (2) thermisch mit dem Antriebsverbrennungsmotor (1) gekoppelt ist.

8. Kraftfahrzeug nach einem der vorangehenden Ansprüche,
**dadurch gekennzeichnet, dass** zusätzlich zu dem Antriebsverbrennungsmotor (1) ein Elektromotor vorhanden ist, der unterstützend oder alternativ zum Antriebsverbrennungsmotor (1) den Antrieb des Kraftfahrzeugs gewährleistet.

## Claims

1. Motor vehicle propelled by an internal combustion engine (1) and having a power supply facility for supplying the electrical consumers onboard the vehicle, the power supply facility comprising a fuel cell system (2) and a battery (6) coupled thereto, energy flows and/or material flows of the internal combustion engine (1) and the fuel cell system (2) being coupled to one another, **characterized in that** a gas generating system (4) of the fuel cell system (2) is adapted to dose hydrogen into an exhaust gas flow from the internal combustion engine (1).

2. Motor vehicle according to Claim 1, **characterized in that** the internal combustion engine (1) and the fuel cell system (2) are connected to a common cooling circuit (5).

3. Motor vehicle according to Claim 2, **characterized in that** the cooling circuit is thermally coupled to the body of the motor vehicle.

4. Motor vehicle according to any one of the preceding Claims, **characterized in that** the gas generating system (4) of the fuel cell system (2) and the exhaust line from the internal combustion engine (1) are thermally coupled.

5. Motor vehicle according to Claim 4, **characterized in that** the gas generating system (4) of the fuel cell system (2) and the exhaust catalytic converter (11) in the exhaust line from the internal combustion engine (1) are thermally coupled.

6. Motor vehicle according to any one of the preceding Claims, **characterized in that** the gas generating system (4) of the fuel cell system (2) is thermally coupled to the vehicle passenger compartment (8).

7. Motor vehicle according to any one of the preceding Claims, **characterized in that** the gas generating system (4) of the fuel cell system (2) is thermally coupled to the internal combustion engine (1).

8. Motor vehicle according to any one of the preceding Claims, **characterized in that** in addition to the internal combustion engine (1) an electric motor is provided, which propels the motor vehicle in support of or as an alternative to the internal combustion engine (1).

## Revendications

1. Véhicule automobile équipé d'un moteur d'entraînement à combustion interne (1) ainsi que d'un dispositif d'alimentation électrique pour l'alimentation des appareillages électriques à bord du véhicule, le dispositif d'alimentation électrique comprenant un système de piles à combustible (2) ainsi qu'une batterie (6) raccordée à celui-ci, les courants d'énergie et/ou de matière du moteur d'entraînement à combustion interne (1) et du système de pile à combustible (2) étant couplés entre eux, **caractérisé en ce qu'**un système générateur de gaz (4) du système de pile à combustible (2) est configuré pour doser l'hydrogène dans un courant de gaz d'échappement du moteur d'entraînement à combustion interne (1).

2. Véhicule automobile selon la revendication 1, **caractérisé en ce que** le moteur d'entraînement à combustion interne (1) et le système de piles à combustible (2) sont branchés à un circuit de refroidissement (5) commun.

3. Véhicule automobile selon la revendication 2, **caractérisé en ce que** le circuit de refroidissement est couplé de manière thermique avec la carrosserie du véhicule automobile.

4. Véhicule automobile selon l'une des revendications précédentes, **caractérisé en ce que** le système générateur de gaz (4) du système de piles à combustible (2) et la branche des gaz d'échappement du moteur d'entraînement à combustion interne (1) sont couplés de manière thermique.

5. Véhicule automobile selon la revendication 4, **caractérisé en ce que** le système générateur de gaz (4) du système de piles à combustible (2) et le catalyseur de purification des gaz d'échappement (11) dans la branche des gaz d'échappement du moteur d'entraînement à combustion interne (1) sont couplés de manière thermique.

6. Véhicule automobile selon l'une des revendications précédentes, **caractérisé en ce que** le système générateur de gaz (4) du système de piles à combustible (2) est couplé de manière thermique avec l'habitacle du véhicule (8).

7. Véhicule automobile selon l'une des revendications précédentes, **caractérisé en ce que** le système générateur de gaz (4) du système de piles à combustible (2) est couplé de manière thermique avec le moteur d'entraînement à combustion interne (1).

8. Véhicule automobile selon l'une des revendications précédentes, **caractérisé en ce qu'**en plus du moteur d'entraînement à combustion interne (1), il existe un moteur électrique qui garantit l'entraînement du véhicule automobile en assistance ou en alternative au moteur d'entraînement à combustion interne (1).
